# FASCICULE DE BREVET EUROPEEN

(11) **EP 1 175 716 B1**
(45) Date de publication et mention de la délivrance du brevet: **30.07.2003**
(21) Numéro de dépôt: 00926585.1
(22) Date de dépôt: 03.05.2000
(51) Int. Cl.: H01S 3/098

(54) **DISPOSITIF ET PROCEDE PERMETTANT LE MODE-BLOCAGE D'UN LASER**
VORRICHTUNG UND VERFAHREN ZUR MODENKOPPLUNG EINES LASERS
DEVICE AND METHOD FOR MODE LOCKING A LASER

(30) Priorité: 03.05.1999 BE 9900314
(43) Date de publication de la demande: 30.01.2002
(73) Titulaire: Facultes Universitaires Notre-Dame de la Paix, 5000 Namur (BE)
(72) Inventeur: PEREMANS, André, B-5020 Malonne (BE); MANI, Alaa, Addin, B-5000 Namur (BE); THIRY, Paul, B-1330 Rixensart (BE)
(74) Mandataire: Van Malderen, Joelle
(86) Numéro de dépôt international: BE0000049
(87) Numéro de publication internationale: WO00067351

(56) Documents cités:
- BUCHVAROV I ET AL: "NONLINEAR DOUBLING MODE-LOCKING OF FEEDBACK CONTROLLED PULSED ND:YAG LASER" OPTICS COMMUNICATIONS,NL,NORTH-HOLLAND PUBLISHING CO. AMSTERDAM, vol. 118, no. 1/02, 1 juillet 1995 (1995-07-01), pages 51-54, XP000508418 ISSN: 0030-4018
- A. DEL CORNO, G. GABETTA, G.C. REALI, V.KUBECEK, J.MAREK: "Shortening of pulses from an active passive mode-locked Nd:Yag laser through two photon absorption in GaAs" PROCEEDINGS OF THE CONFERENCE ON LASERS AND ELECTRO-OPTICS (CLEO), ANAHEIM, vol. 7, 21 - 25 mai 1990, pages 120-122, XP002144890 US, New-York, IEEE 1990
- STANKOV K A: "NEGATIVE FEEDBACK USING A NONLINEAR MIRROR FOR THE GENERATION OF A LONG TRAIN OF SHORT LIGHT PULSES" APPLIED PHYSICS B. PHOTOPHYSICS AND CHEMISTRY,DE,SPRINGER VERLAG. HEIDELBERG, vol. B52, no. 3, 1 mars 1991 (1991-03-01), pages 158-162, XP000219814
- KELLER U ET AL: "SELF-STARTING FEMTOSECOND MODE-LOCKED ND:GLASS LASER THAT USES INTRACAVITY SATURABLE ABSORBERS" OPTICS LETTERS,US,OPTICAL SOCIETY OF AMERICA, WASHINGTON, vol. 18, no. 13, 1 juillet 1993 (1993-07-01), pages 1077-1079, XP000372744 ISSN: 0146-9592
- BUCHVAROV I CH ET AL: "PULSE SHORTENING IN AN ACTIVELY MODE-LOCKED LASER WITH A FREQUENCY-DOUBLING NONLINEAR MIRROR" OPTICS COMMUNICATIONS,NL,NORTH-HOLLAND PUBLISHING CO. AMSTERDAM, vol. 83, no. 3 / 04, 1 juin 1991 (1991-06-01), pages 241-245, XP000232060 ISSN: 0030-4018
- MARTINEZ O E ET AL: "DETERMINISTIC PASSIVE MODE LOCKING OF SOLID-STATE LASERS" APPLIED PHYSICS LETTERS,US,AMERICAN INSTITUTE OF PHYSICS. NEW YORK, vol. 39, no. 11, 1 décembre 1981 (1981-12-01), pages 875-877, XP000706172 ISSN: 0003-6951

## Description

### Objet de l'invention

La présente invention se rapporte à un dispositif et à un procédé permettant le mode-blocage d'un laser, et en particulier d'un laser fonctionnant en mode pulsé.

### Arrière-plan technologique

Une cavité laser est constituée d'un milieu amplificateur de lumière placé au sein d'une cavité résonnante délimitée par deux miroirs orientés en auto-collimation, c'est-à-dire face à face. Lorsque le milieu amplificateur est activé, une oscillation optique est entretenue dans la cavité, de sorte que le dispositif puisse émettre un faisceau optique caractérisé par une brillance spatiale et spectrale très élevée.

Le mode-blocage d'une cavité laser consiste à forcer la circulation d'impulsions optiques brèves dans la dite cavité résonnante, de manière à générer des impulsions de forte intensité crête et d'une durée typiquement inférieure à 100 picosecondes pouvant aller jusqu'à quelques femtosecondes en fonction du milieu amplificateur utilisé.

Parmi les lasers, on peut distinguer les lasers de type continu où le milieu amplificateur est activé de manière permanente, c'est-à-dire sur des échelles de temps de plusieurs secondes à plusieurs heures. Un laser continu mode-bloqué pourra donc générer des impulsions brèves à un taux de répétition de l'ordre de quelques dizaines à quelques centaines de mégahertz correspondant au temps de circulation (aller-retour) des impulsions dans la cavité résonnante.

Ce taux de répétition élevé, implique que ce type de laser émettra des impulsions optiques de faible énergie. Ce type de laser est néanmoins adéquat, pour de nombreuses applications requérant une puissance optique moyenne élevée mais pouvant se satisfaire d'énergie impulsionnelle faible telles que la technologie LIDAR, ou les spectroscopies «linéaires» d'absorption, de photoionisation, de fluorescence,...

D'autre part, il existe des lasers de type pulsé caractérisés par un cycle de travail très faible du milieu amplificateur (inférieure à 1/50). Ce dernier est activé pendant un courte période, typiquement inférieure à 1 milliseconde à un faible taux de répétition typiquement de quelques dizaines de hertz. En mode pulsé, le milieu amplificateur peut être temporairement très fortement activé, correspondant à un stockage important d'énergie optique dans le milieu amplificateur, de sorte qu'un laser pulsé mode-bloqué pourra générer des impulsions nettement plus énergétiques que celles générées par les lasers mode-bloqué de type continu. Par contre, le fait d'une part, que le coefficient d'amplification du milieu amplificateur ne soit pas constant pendant la période transitoire d'activation et, d'autre part, que la stabilisation de l'oscillation optique dans la cavité laser est un processus dynamique qui requiert un certain temps et peut donc être incomplète pendant le temps d'activation du milieu amplificateur, limite l'efficacité du mode-blocage et par conséquent, la brièveté et la stabilité énergétique des dites impulsions optiques générées.

Les lasers pulsés sont utilisés dans les processus de fabrication nécessitant des impulsions optiques de forte énergie tels que pour l'ablation de matériaux, la découpe laser, traitement de surface, ainsi pour les spectroscopies optiques « non-linéaires» telles que l'ionisation résonnante à plusieurs photons, la spectroscopie de génération de fréquence somme ainsi que toutes techniques requérant un faible taux de répétition du laser (mesures résolues en temps).

Une manière d'obtenir le mode-blocage des lasers de type pulsé est d'insérer une cellule à colorant (solvant liquide), éventuellement associée à un limiteur d'intensité dans la cavité laser. Ce dispositif présente plusieurs inconvénients, en particulier :
- la mobilité et l'inhomogéniété du solvant qui circule dans la cellule sont des facteurs d'instabilité énergétique des impulsions émises.
- La dégradation chimique ou photochimique dudit colorant nécessite l'intervention régulière de personnes qualifiées pour obtenir une optimisation du processus de mode-blocage.

Le document US-A-4914658 décrit un laser à l'état solide tel qu'un laser Yttrium Aluminium Garnet dopé au Néodyme (Nd:YAG) auquel est adjoint un cristal non-linéaire et un miroir dichroïque en vue de créer un moyen optique non-linéaire permettant le mode-blocage du laser. Dans la forme la plus simple de mise en oeuvre du dispositif, le cristal non-linéaire permet de générer un faisceau de deuxième harmonique à partir du faisceau fondamental amplifié par le milieu amplificateur. L'oscillation dans la cavité résonnante de la portion du faisceau fondamental non-convertie par le cristal non-linéaire, est discriminée négativement grâce à un miroir dichroïque qui doit présenter un coefficient de réflexion à la fréquence de deuxième harmonique supérieur à celui à la fréquence fondamentale.

L'ajustement de la distance optique entre le cristal non-linéaire et le miroir dichroïque permet d'obtenir un déphasage adéquat entre le faisceau fondamental et le faisceau de deuxième harmonique afin d'obtenir une reconversion efficace du faisceau de deuxième harmonique en faisceau fondamental dans le cristal non-linéaire. Ce déphasage peut aussi être obtenu par insertion d'une lame transparente entre le cristal non-linéaire et le miroir dichroïque.

Le moyen optique non linéaire a pour fonction d'augmenter le facteur qualité de la cavité laser, c'est-à-dire de diminuer les pertes d'énergie du faisceau laser par réflexion contre le miroir dichroïque, quand la puissance instantanée du faisceau à la fréquence fondamentale généré par le milieu amplificateur augmente. En d'autres termes, le moyen optique non linéaire induit une rétroaction positive sur le facteur qualité de la cavité laser en fonction de la puissance instantanée du faisceau à la fréquence fondamentale.

Le dispositif optique non-linéaire de mode-blocage est en outre caractérisé en ce que le rapport des puissances du faisceau de deuxième harmonique par rapport au faisceau à la fréquence fondamentale augmente avec la puissance du faisceau à la fréquence fondamentale.

Le document EP-A-0951111 propose un dispositif et une méthode pour permettre le mode-blocage d'un laser, de préférence fonctionnant également en mode continu, qui se basent sur le principe décrit dans le document US-A-4914658. Dans ce cas de figure, il est proposé de convertir une partie du faisceau laser à la fréquence fondamentale en un faisceau de deuxième harmonique par l'utilisation d'un cristal non-linéaire. L'oscillation dans la cavité résonnante de la portion du faisceau fondamental non-convertie dans le cristal non-linéaire est discriminée négativement grâce à la combinaison d'une lame retardatrice et d'un polariseur. Dans ce document, le milieu amplificateur est du Nd:Vanadate, le cristal non linéaire est du Lithium Triborate et la lame retardatrice présente un retard de λ/4= 1064 nm et λ/2=532 nm. La lame retardatrice est placée entre le cristal non linéaire et le miroir dichroïque tandis que le polariseur est placé entre le milieu amplificateur et le cristal non linéaire.

Il est précisé dans ce document que le miroir dichroïque, placé derrière le cristal non-linéaire, présente un coefficient de réflexion à la fréquence de deuxième harmonique qui n'est pas plus élevé que le coefficient de réflexion à la fréquence fondamentale.

Le moyen optique non linéaire décrit dans ce document a pour fonction d'augmenter le facteur qualité de la cavité laser, c'est-à-dire de diminuer les pertes d'énergie du faisceau laser par réflexion contre le polariseur, quand la puissance instantanée du faisceau à la fréquence fondamentale généré par le milieu amplificateur augmente. En d'autres termes, le moyen optique non linéaire induit une rétroaction positive sur le facteur qualité de la cavité laser en fonction de la puissance instantanée du faisceau à la fréquence fondamentale.

Les dispositifs décrits dans les deux documents précédents US-A-4914658 et EP-0951111 permettent le mode-blocage efficace des lasers continus. Par exemple, des impulsions aussi brèves que ∼10 picosecondes LTMH (largeur totale à mi-hauteur) peuvent être générées lorsqu'un milieu amplificateur Nd:YAG est utilisé. Par contre ces dispositifs fonctionnent mal dans le cas de lasers pulsés. Les durées d'impulsions les plus brèves jamais obtenues grâce au dispositif tel que décrit dans le document US-A-49146558 sont de 35 picosecondes LTMH (largeur total à mi-hauteur)dans le cas d'un laser Nd:YAG pulsé. Ces mauvaises performances résultent du fait que le coefficient d'amplification du milieu actif, l'énergie des impulsions optiques et donc le rendement de conversion du cristal non-linéaire utilisé dans le dispositif non-linéaire varient fortement au cours de la période d'activation du milieu amplificateur ce qui empêche un stabilisation de l'oscillation optique dans la cavité résonnante. D'autre part, le nombre réduit d'aller-retour intracavité, et donc d'interaction avec le dispositif non-linéaire, réalisés par les impulsions optiques pendant le temps d'activation du milieu amplificateur limite aussi l'efficacité du mode-blocage.

### Buts de l'invention

La présente invention vise à fournir un dispositif et un procédé de mode-blocage d'un laser permettant d'obtenir des impulsions particulièrement brèves et présentant une grande stabilité énergétique, même dans le cas d'un laser pulsé.

La présente invention vise en particulier à s'affranchir des inconvénients des dispositifs et procédés de l'état de la technique.

En particulier, la présente invention vise à proposer un dispositif constitué uniquement d'éléments solides et donc simple à entretenir comparativement aux dispositifs utilisant des colorants (solvants liquides), robuste et peu coûteux. En outre, les différents constituants utilisés devront présenter un faible taux de dégradation dans le temps.

### Principaux éléments caractéristiques de l'invention

La présente invention se rapporte à un dispositif pour le mode-blocage d'un laser, en particulier un laser de type pulsé, comprenant une cavité laser délimitée par un premier miroir et un second miroir, munie d'un milieu actif pour l'amplification du faisceau laser de fréquence fondamentale, et un moyen optique non-linéaire solide qui comprend au moins ledit second miroir et qui présente un coefficient de réflexion qui augmente avec l'intensité du faisceau, caractérisé en ce que ledit dispositif comprend en outre dans la cavité laser un limiteur d'intensité solide dont le coefficient de transmission du faisceau fondamental qui diminue avec l'intensité dudit faisceau laser.

Plus précisément, alors que les dispositifs tels que décrits dans le document US-A-4914658 et EP-0951111 ne présentent, par l'utilisation d'un moyen optique non linéaire, qu'une rétroaction positive sur le facteur de qualité de la cavité résonnante laser en fonction de la puissance du faisceau fondamental, le dispositif selon la présente invention présente, par l'utilisation conjointe du moyen optique non linéaire et du limiteur d'intensité, à la fois une rétroaction positive et une rétroaction négative sur ce facteur de qualité. Ceci est dû au fait que le moyen optique non linéaire présente un coefficient de réflexion qui augmente avec l'intensité du faisceau fondamental tandis que le limiteur d'intensité présentant un coefficient de transmission à la fréquence fondamentale du laser qui diminue avec l'intensité du faisceau fondamental.

L'utilisation conjointe du moyen optique non-linéaire et du limiteur d'intensité implique que le rapport de puissance du faisceau de deuxième harmonique par rapport au faisceau fondamental n'augmente plus avec l'intensité du faisceau fondamental lorsque cette dernière intensité dépasse le seuil de fonctionnement de limiteur d'intensité.

Avantageusement, le moyen optique non-linéaire comprend ledit second miroir qui correspond à un miroir dichroïque et un cristal non-linéaire convertisseur de la fréquence laser.

Le moyen optique non-linéaire peut également ne comprendre que ledit second miroir qui correspond alors à un absorbeur saturable anti-résonnant Fabry-Perot construit à partir d'une superposition de films semi-conducteurs diélectriques ou métalliques.

Le moyen optique non linéaire peut également comprendre ledit second miroir qui correspond à un miroir dichroïque, un cristal non-linéaire convertisseur de fréquence et au moins un polariseur.

Le limiteur d'intensité est constitué par une lame réalisée en un matériau semi-conducteur GaAs, CdSe ou InP.

De manière avantageuse, le limiteur d'intensité est disposé entre le milieu amplificateur et le moyen optique non linéaire.

De manière particulièrement avantageuse, le limiteur d'intensité et le moyen optique non linéaire sont disposés de part et d'autre du milieu amplificateur.

La présente invention se rapporte également à un procédé pour le mode-blocage d'un laser, en particulier un laser de type pulsé, comprenant:
- l'émission d'un faisceau de rayonnement laser de fréquence fondamentale par stimulation d'un milieu laser actif,
- la conversion du faisceau de fréquence fondamentale en un faisceau de fréquence harmonique,
- le renvoi du faisceau de fréquence harmonique vers la cavité résonnante
- la reconversion du faisceau de fréquence harmonique en un faisceau de fréquence fondamentale,
la limitation d'intensité du faisceau de fréquence fondamentale au sein de la cavité résonnante.

### Brève description des dessins

La figure 1 décrit une forme particulière d'exécution du dispositif permettant la réalisation d'un oscillateur Nd:YAG selon le principe de la présente invention.

La figure 2 représente l'enveloppe du train d'impulsions obtenue pour l'oscillateur Nd:YAG tel que décrit à la figure 1.

La figure 3 représente la mesure de la largeur de l'impulsion qui est effectuée par une auto-corrélation de second ordre standard sans signal de fond.

### Description détaillée d'une forme d'exécution de l'invention

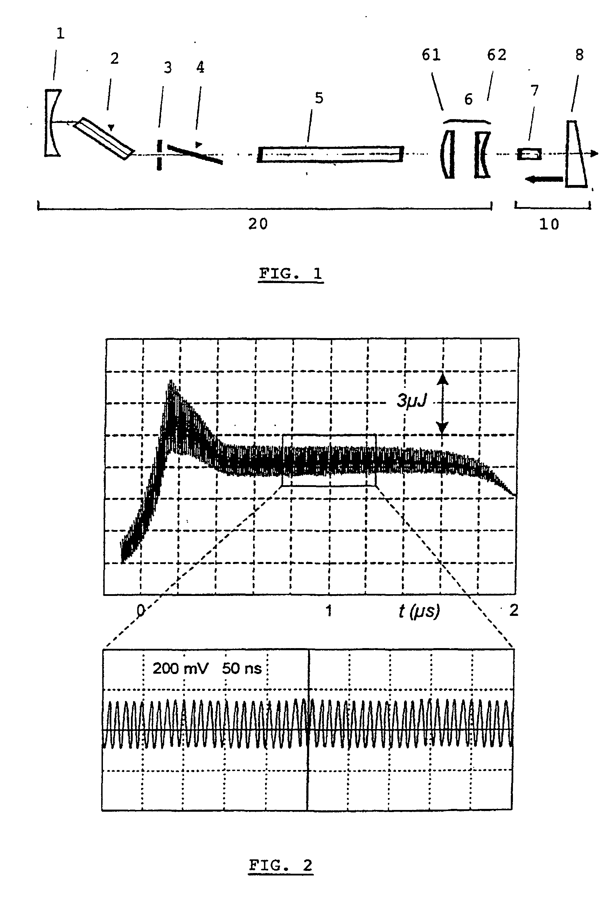

La figure 1 décrit à titre d'exemple une forme d'exécution du dispositif selon l'invention. On réalise de manière classique d'une part une cavité résonnante 20 délimitée par un premier miroir 1 et un second miroir 8 et d'autre part un moyen optique non-linéaire 10 comprenant ledit second miroir 8. Le premier miroir 1 est à réflexion élevée, de préférence totale, et le second miroir 8 est un miroir dichroïque. Au sein de la cavité résonnante 20, on dispose un milieu actif 5, qui peut être de manière classique un milieu Nd:YAG (Yttrium Aluminium Garnet dopé au Néodyme), Yb:YAG, Cr:YAG, Nd:YLF, Nd:verre, Ti:saphir, Cr:forstérite ou encore Yb:verre. Le milieu est adapté pour émettre sous stimulation des rayons laser à une fréquence fondamentale ω1. Le choix d'un tel milieu est dicté par la longueur d'onde du laser et la largeur spectrale du gain désirées.

Selon une forme d'exécution de l'invention, le milieu amplificateur est un barreau de cristal Nd:YAG 5 présentant des dimensions de 115 X 7 mm qui est pompé par deux lampes à flash permettant la stimulation d'un faisceau laser d'une fréquence fondamentale ω1 = 1064 nm.

L'énergie de la pompe électrique est de ∼17 J, tandis que la fréquence de répétition est de 20 Hz.

Deux lentilles 61 et 62 pourvues d'un revêtement anti-reflets et caractérisées respectivement par des distances focales de 100 et de -40 mm forment le télescope 6. Un diaphragme 3 de 0,8 mm limite le fonctionnement du laser à un seul mode transversal. Le limiteur d'intensité destiné au mode-blocage actif selon cette forme d'exécution comprend un élément AOML 2 (mode-bloqueur photo-acoustique) situé à proximité du miroir à réflexion élevée 1 et une lame de GaAs 4. La longueur de la cavité totale est d'approximativement 1,5 m et est adaptée à la fréquence de modulation de 100 Mhz de l'AOML.

Le moyen optique non-linéaire 10 comprend en plus du miroir dichroïque 8, selon la forme d'exécution représentée à la figure 1, un cristal non-linéaire 7 de type BBO d'une longueur de 3 mm qui permet la génération d'un faisceau de second harmonique (ω2 = 532 nm) par interaction de type I. Le moyen optique non-linéaire 10 présente un coefficient de réflexion supérieur à 99% à 532 nm et égal à 25% à 1064 nm. D'autres cristaux non-linéaires pourraient être utilisés tels que le LBO (Lithium Triborate), le KDP (Potassium Dihydrogéno-Phosphate), le KTP (Potassium Titanyl Phosphate), le BBO (Bêta-Baryum Borate), le PPLN (Periodically Poled Lithium Niobate) ou encore le KNbO₃ (Potassium Niobate). La lame de GaAs est placée à incidence de Brewster. L'ajustement de la distance séparant le cristal non-linéaire 7 du miroir dichroïque 8 permet le réglage du déphasage entre le faisceau fondamental et le faisceau de second harmonique lors du processus de reconversion.

Lorsque cette distance est correctement ajustée, on observe une augmentation notable de l'intensité du faisceau généré par la cavité, ce qui révèle le mode-blocage passif efficace de l'oscillateur YAG.

La puissance moyenne de sortie de la cavité laser est de ∼30 mW (énergie de train d'impulsions = 1,5 mJ) pour une énergie de pompe électrique de ∼17 J lorsque l'élément AOML 2 est utilisé dans la cavité.

La figure 2 représente l'enveloppe du train d'impulsions long de 2 µs telle que mesurée par une photodiode p-i-n avec un oscilloscope de largeur de bande de 60 MHz. La première partie de l'enveloppe (0-500 ns) est caractérisée par une variation rapide de l'énergie d'impulsion et est suivie par un plateau de 600 à 1800 ns caractérisé par une énergie d'impulsion quasi constante, estimée à 10 µJ/impulsion.

Bien que des études précédentes aient révélé que ce dispositif pouvait fonctionner sans le mode-blocage actif, un fonctionnement beaucoup plus stable de l'oscillateur YAG a été observé lorsque l'élément AOML est utilisé dans la cavité.

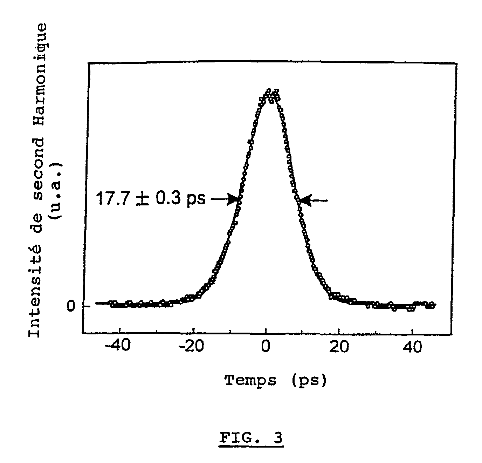

La figure 3 présente la mesure de la largeur des impulsions au milieu du plateau de l'enveloppe du train. Cette mesure est réalisée par auto-corrélation du second ordre standard sans signal de fond en synchronisant la fenêtre de 50 ns de l'intégrateur de signal d'auto-corrélation sur le milieu du plateau stable de l'enveloppe des trains.

Supposant un profil gaussien, on déduit une durée d'impulsion de 12 ps LTMH pour l'impulsion fondamentale. L'intensité crête à l'intérieur de la cavité atteint une valeur de l'ordre de 55 MW/cm², ce qui est en accord avec le commencement de l'absorption à deux photons dans un semi-conducteur de GaAs.

En conclusion, il est possible d'obtenir une durée d'impulsion réduite à 12 ps ou même moins à partir d'un laser Nd:YAG pulsé pompé par lampe à flash, en combinant un élément de rétroaction passif-négatif constituant le limiteur d'intensité, qui est dans le cas présent une lame de GaAs, à un élément de rétroaction positif qui est un moyen optique non-linéaire dans le présent cas, constitué d'un cristal non-linéaire (BBO) doubleur de fréquence associé à un miroir dichroïque.

L'augmentation du nombre d'aller-retour réalisés par les impulsions optiques ainsi que leur stabilisation en énergie induite par le limiteur d'intensité constituent deux facteurs clé pour obtenir des impulsions brèves. La durée de ces impulsions est très proche de la limite inférieure de ∼10 ps, imposée par la transformée de Fourier du spectre de gain du milieu amplificateur Nd:YAG.

Le laser pulsé équipé du dispositif décrit dans le présent document présente les caractéristiques idéales pour le pompage synchrone d'oscillateur paramétrique optique.

D'autre part, l'interposition intra- ou extra-cavité d'éléments passifs et actifs de modification et de sélection de polarisation tels que cellule de Pockels, polariseurs et lames retardatrices permettra de sélectionner des impulsions uniques énergétiques.

## Revendications

1. Dispositif pour le mode-blocage d'un laser, en particulier un laser de type pulsé, comprenant une cavité résonnante (20),
- délimitée par un premier miroir (1) et un second miroir (B),
- munie d'un milieu laser actif amplificateur (5) pour l'amplification d'un faisceau de rayonnement laser à la fréquence fondamentale (ω1),
- et d'un moyen optique non-linéaire solide (10), qui comprend au moins ledit second miroir (8), pour la conversion réversible du rayonnement de fréquence fondamentale (ω1) en rayonnement de fréquence harmonique (ω2), ledit moyen optique non-linéaire (10) présentant un coefficient de réflexion qui augmente avec l'intensité du rayonnement à la fréquence fondamentale ;
ledit dispositif comprenant en outre un limiteur d'intensité (4) solide, disposé dans la cavité résonnante (20) et dont le coefficient de transmission du rayonnement laser diminue avec l'intensité dudit rayonnement, **caractérisé en ce que** ledit limiteur d'intensité (4) comprend une lame GaAs, CdSe ou InP.

2. Dispositif selon la revendication 1, **caractérisé en ce que** le moyen optique non-linéaire (10) comprend ledit second miroir (8) qui correspond à un miroir dichroigue et un cristal non-linéaire (7) capable de convertir le rayonnement de fréquence fondamentale en rayonnement de fréquence harmonique.

3. Dispositif selon la revendication 1, **caractérisé en ce que** le moyen optique non-linéaire (10) comprend ledit second miroir (8) qui correspond à un miroir dichroique, un cristal non-linéaire (7) capable de convertir le rayonnement de fréquence fondamentale en rayonnement de fréquence harmonique et au moins un élément permettant la modification et/ou la sélection de polarisation.

4. Dispositif selon la revendication 2 ou 3, **caractérisé en ce que** ledit cristal non linéaire est un cristal BBO.

5. Dispositif selon la revendication 1, **caractérisé en ce que** le moyen optique non-linéaire (10) comprend uniquement le second miroir (8), ledit second miroir correspondant à un absorbeur saturable anti-résonnant Fabry-Perot construit à partir d'une superposition de films semi-conducteurs diélectriques ou métalliques.

6. Dispositif selon l'une des revendications précédentes, **caractérisé en ce que** le limiteur d'intensité (4) et le moyen optique non-linéaire (10) sont placés de part et d'autre du milieu actif amplificateur (5).

7. Dispositif selon l'une des revendications précédentes, **caractérisé en ce que** le limiteur d'intensité (4) est placé entre le moyen optique non-linéaire (10) et le milieu actif amplificateur (5).

8. Dispositif selon l'une des revendications précédentes, **caractérisé en ce que** le milieu actif amplificateur est un cristal Nd :YAG.

9. Dispositif selon l'une des revendications précédentes, **caractérisé en ce que** le moyen optique non-linéaire (10) présente un coefficient de réflexion du rayonnement de deuxième harmonique (ω2) supérieur au coefficient de réflexion du rayonnement de fréquence fondamentale (ω1).

10. Dispositif pour le mode-blocage d'un laser, en particulier un laser de type puisé, comprenant une cavité résonnante (20),
- délimitée par un premier miroir (1) et un second miroir (8),
- munie d'un milieu laser actif amplificateur (5) pour l'amplification d'un faisceau de rayonnement laser à la fréquence fondamentale (ω1),
- et d'un moyen optique non-linéaire solide (10), qui comprend au moins ledit second, miroir (8), pour la conversion réversible du rayonnement de fréquence fondamentale (ω1) en rayonnement de fréquence harmonique (ω2), ledit moyen optique non-linéaire (10) présentant un coefficient de réflexion qui augmente avec l'intensité du rayonnement à la fréquence fondamentale,
**caractérisé en ce que** ledit dispositif est pourvu d'un limiteur d'intensité comprenant une lame GaAs, CdSe ou InP présentant un coefficient de transmission qui diminue avec l'intensité du rayonnement à la fréquence fondamentale de manière à assurer conjointement avec ledit moyen optique non linéaire (10) à la fois une rétroaction positive et une rétroaction négative sur le facteur qualité de la cavité résonnante (20).

11. Procédé pour le mode-blocage d'un laser, en particulier un laser de type pulsé, **caractérisé en ce qu'**il comprend :
- l'émission d'un faisceau de rayonnement laser de fréquence fondamentale (ω1) par stimulation d'un milieu laser actif (5),
- la conversion du faisceau de fréquence fondamentale (ω1) en un faisceau de fréquence harmonique (ω2),
- le renvoi du faisceau de fréquence harmonique (ω2) vers la cavité résonnante (20),
- la reconversion du faisceau de fréquence harmonique (ω2) en un faisceau de fréquence fondamentale (ω1), et
- la limitation d'intensité du faisceau de fréquence fondamentale (ω1) au sein de la cavité résonnante (20), au moyen d'au moins une lame GaAs, CdSe ou InP.

## Patentansprüche

1. Vorrichtung zur Modenkopplung eines Lasers, insbesondere eines Impulslasers, mit einem Resonanzraum (20), der
- durch einen ersten Spiegel (1) und einen zweiten Spiegel (8) begrenzt ist,
- mit einem aktiven, verstärkenden Lasermedium (5) zur Verstärkung eines Laserstrahlenbündels in der Grundfrequenz (ω1) ausgestattet ist,
- mit einem nichtlinearen optischen Festkörpermittel (10) ausgestattet ist, das mindestens den besagten zweiten Spiegel (8) für die umkehrbare Umwandlung der Strahlung in der Grundfrequenz (ω1) in eine harmonische Frequenz (ω2) umfasst, wobei das besagte nichtlineare optische Mittel (10) einen Reflexionsfaktor aufweist, der mit der Intensität der Strahlung in der Grundfrequenz zunimmt;
wobei die besagte Vorrichtung außerdem einen Festkörper umfasst als Intensitätsbegrenzer (4), der im Resonanzraum (20) angeordnet ist und dessen Übertragungsfaktor der Laserstrahlung mit der Intensität der besagten Strahlung abnimmt, **dadurch gekennzeichnet, dass** der besagte Intensitätsbegrenzer (4) eine GaAs-, CdSe- oder InP-Platte umfasst.

2. Vorrichtung nach Anspruch 1, **dadurch gekennzeichnet, dass** das nichtlineare optische Mittel (10) den besagten zweiten Spiegel (8), der ein dichroitischer Spiegel ist, sowie einen nichtlinearen Kristall (7), der die Fähigkeit hat, die Strahlung in der Grundfrequenz in eine Strahlung mit einer harmonischen Frequenz umzuwandeln, umfasst.

3. Vorrichtung nach Anspruch 1, **dadurch gekennzeichnet, dass** das nichtlineare optische Mittel (10) den besagten zweiten Spiegel (8), der ein dichroitischer Spiegel ist, einen nichtlinearen Kristall (7), der die Fähigkeit hat, die Strahlung in der Grundfrequenz in eine Strahlung mit einer harmonischen Frequenz umzuwandeln, und mindestens ein Element, das die Polarisations -änderung oder -selektion ermöglicht, umfasst.

4. Vorrichtung nach Anspruch 2 oder 3, **dadurch gekennzeichnet, dass** der besagte nichtlineare Kristall ein BBO-Kristall ist.

5. Vorrichtung nach Anspruch 1, **dadurch gekennzeichnet, dass** das nichtlineare optische Mittel (10) nur den zweiten Spiegel (8) umfasst, wobei der besagte zweite Spiegel ein antiresonanter Fabry-Perot sättigbarer Absorber ist, der durch Überlagerung dielektrischer oder metallischer Halbleiterfilme hergestellt wurde.

6. Vorrichtung nach einem der vorherstehenden Ansprüche, **dadurch gekennzeichnet, dass** der Intensitätsbegrenzer (4) und das nichtlineare optische Mittel (10) auf je einer Seite des verstärkenden aktiven Mediums (5) angeordnet sind.

7. Vorrichtung nach einem der vorherstehenden Ansprüche, **dadurch gekennzeichnet, dass** der Intensitätsbegrenzer (4) sich zwischen dem nichtlinearen optischen Mittel (10) und dem verstärkenden aktiven Medium (5) befindet.

8. Vorrichtung nach einem der vorherstehenden Ansprüche, **dadurch gekennzeichnet, dass** das verstärkende aktive Medium (5) ein Nd:YAG-Kristall ist.

9. Vorrichtung nach einem der vorherstehenden Ansprüche, **dadurch gekennzeichnet, dass** das nichtlineare optische Mittel (10) einen Reflexionsfaktor der Strahlung der zweiten Harmonischen (ω2) aufweist, der höher ist, als der Reflexionsfaktor der Strahlung in der Grundfrequenz (ω1).

10. Vorrichtung zur Modenkopplung eines Lasers, insbesondere eines Impulslasers, mit einem Resonanzraum (20), der
- durch einen ersten Spiegel (1) und einen zweiten Spiegel (8) begrenzt ist,
- mit einem aktiven, verstärkenden Lasermedium zur Verstärkung eines Laserstrahlenbündels in der Grundfrequenz (ω1) ausgestattet ist,
- mit einem nichtlinearen optischen Festkörpermittel (10) ausgestattet ist, das mindestens den besagten zweiten Spiegel (8) für die umkehrbare Umwandlung der Strahlung in der Grundfrequenz (ω1) in eine harmonische Frequenz (ω2) umfasst, wobei das besagte nichtlineare optische Mittel (10) einen Reflexionsfaktor aufweist, der mit der Intensität der Strahlung in der Grundfrequenz zunimmt;
**dadurch gekennzeichnet, dass** die besagte Vorrichtung mit einem Intensitätsbegrenzer mit einer GaAs-, CdSe- oder InP-Platte ausgestattet ist, der einen Übertragungsfaktor aufweist, der mit der Intensität der Strahlung in der Grundfrequenz abnimmt, so dass zusammen mit dem besagten nichtlinearen optischen Mittel (10) gleichzeitig eine positive und eine negative Rückkopplung auf den Gütefaktor des Resonanzraums gewährleistet wird.

11. Vorrichtung zur Modenkopplung eines Lasers, insbesondere eines Impulslasers, **dadurch gekennzeichnet, dass** sie die folgenden Schritte umfasst:
- die Emission eines Laserstrahlenbündels in der Grundfrequenz (ω1) durch Anregung eines aktiven Lasermediums (5),
- die Umwandlung des Strahlenbündels in der Grundfrequenz (ω1) in ein Strahlenbündel mit einer harmonischen Frequenz (ω2),
- die Rückstrahlung des Strahlenbündels mit der harmonischen Frequenz (ω2) in den Resonanzraum (20),
- die Rückumwandlung des Strahlenbündels mit der harmonischen Frequenz (ω2) in ein Strahlenbündel in der Grundfrequenz (ω1) und
- die Intensitätsbegrenzung des Strahlenbündels in der Grundfrequenz (ω1) im Inneren des Resonanzraumes (20) mittels einer GaAs-, CdSe- oder InP-Platte.

## Claims

1. A device for mode-locking a laser, in particular a laser of pulsed type, comprising a resonant cavity (20):
- delimited by a first mirror (1) and a second mirror (8),
- provided with an amplifying active laser medium (5) for amplifying a laser radiation beam at the fundamental frequency (ω1),
- and with a solid non-linear optical means (10), comprising at least said second mirror (8), for the reversible conversion of the fundamental frequency radiation (ω1) into a harmonic frequency radiation (ω2), said non-linear optical means (10) having a reflection coefficient increasing with the intensity of radiation at the fundamental frequency;
said device further comprising a solid intensity limiter (4), arranged in the resonant cavity (20) and whose laser radiation transmission coefficient decreases with the intensity of said radiation, **characterized in that** said intensity limiter (4) comprises a GaAs, CdSe or InP plate.

2. A device according to claim 1, **characterized in that** the non-linear optical means (10) comprises said second mirror (8) corresponding to a dichroic mirror and a non-linear crystal (7) being able to convert the fundamental frequency radiation into a harmonic frequency radiation.

3. A device according to claim 1, **characterized in that** the non-linear optical means (10) comprises said second mirror (8) corresponding to a dichroic mirror, a non-linear crystal (7) being able to convert the fundamental frequency radiation into a harmonic frequency radiation and at least one element for modifying and/or selecting polarization.

4. A device according to claim 2 or 3, **characterized in that** said non-linar crystal is a BBO crystal.

5. A device according to claim 1, **characterized in that** the non-linear optical means (10) only comprises the second mirror (8), said second mirror corresponding to an anti-resonant Fabry-Perot saturable absorber built up from overlapped dielectric or metallic semiconductor films.

6. A device according to any one of the preceding claims, **characterized in that** the intensity limiter (4) and the non-linear optical means (10) are arranged on either side of the amplifying active medium (5).

7. A device according to any one of the preceding claims, **characterized in that** the intensity limiter (4) is arranged between the non-linear optical means (10) and the amplifying active medium (5).

8. A device according to any one of the preceding claims, **characterized in that** the amplifying active medium is a Nd:YAG crystal.

9. A device according to any one of the preceding claims, **characterized in that** the non-linear optical means (10) has a second harmonic radiation (ω2) reflection coefficient higher than the fundamental frequency radiation (ω1) reflection coefficient.

10. A device for mode-locking a laser, in particular a laser of pulsed type, comprising a resonant cavity (20):
- delimited by a first mirror (1) and a second mirror (8),
- provided with an amplifying active laser medium (5) for amplifying a laser radiation beam at the fundamental frequency (ω1),
- and with a solid non-linear optical means (10), comprising at least said second mirror (8), for the reversible conversion of the fundamental frequency radiation (ω1) into a harmonic frequency radiation (ω2), said non-linear optical means (10) having a reflection coefficient increasing with the intensity of radiation at the fundamental frequency;
**characterized in that** said device is provided with an intensity limiter comprising a GaAs, CdSe or InP plate with a transmission coefficient decreasing with the intensity of radiation at the fundamental frequency so as to provide together with said non-linear optical means (10) both a positive feedback and a negative feedback on the quality factor of the resonant cavity (20).

11. A method for mode-locking a laser, in particular a laser of pulsed type, **characterized in that** it comprises the steps of:
- emitting a laser radiation beam at the fundamental frequency (ω1) through stimulation of an active laser medium (5),
- converting the fundamental frequency beam (ω1) into a harmonic frequency beam (ω2),
- returning the harmonic frequency beam (ω2) to the resonant cavity (20),
- reconverting the harmonic frequency beam (ω2) into a fundamental frequency beam (ω1), and
- limiting the intensity of the fundamental frequency beam (ω1) within the resonant cavity (20), using at least one GaAs, CdSe or InP plate.
